# EUROPEAN PATENT APPLICATION

(11) **EP 4 570 481 A1**
(43) Date of publication of application: **18.06.2025**
(21) Application number: 24216852.4
(22) Date of filing: 02.12.2024
(51) Int. Cl.: B29D 30/02, B29D 30/06

(54) **METHOD OF MANUFACTURING SUPPORTING STRUCTURES WITH CORD-REINFORCED POLYMER COMPOSITION SPOKES FOR NON-PNEUMATIC TIRES**

(30) Priority: 12.12.2023 US 202318536741
(71) Applicant: The Goodyear Tire & Rubber Company, Akron, OH 44316 (US)
(72) Inventor: MARTIN, Arnaud Fabrice Jean Martin, F-54430 Réhon (FR); LETTIERI, Joseph Carmine, Hudson, 44236 (US); SPORTELLI, Francesco, 3249 Bettembourg (LU)
(74) Representative: Kutsch, Bernd

(57) **Abstract**

The invention is directed to advanced methods of manufacturing a supporting structure for a non-pneumatic tire comprising at least one cord-reinforced polymer composition spoke. One method comprises providing a first mold member at least partially covered by a first polymer composition layer, applying at least one cord reinforcement (250) onto the first polymer composition layer (13'), and over-molding a second polymer composition layer onto the first polymer composition layer to enclose said cord reinforcement between the first polymer composition layer and the second polymer composition layer so as to obtain at least a portion of the cord-reinforced polymer composition spoke. In some of the methods, the supporting structure comprises X-shaped spokes and the provision of corresponding mold inserts and/or mold members. Furthermore, the present invention is directed to a method of manufacturing a tire including molding of at least a circumferential sector of a supporting structure comprising cord-reinforced polymer composition.

## Description

### Field of the Invention

The present invention is directed to methods of manufacturing supporting structures for non-pneumatic tires, comprising cord-reinforced polymer composition spokes. Furthermore, the invention is directed to a method of manufacturing a non-pneumatic tire comprising such supporting structures and/or spokes.

### Background of the Invention

Some non-pneumatic tires comprise a supporting structure arranged between a tread band and a hub portion, wherein the supporting structure comprises a plurality of spokes. In some cases, such spokes comprise polymer material. In order to improve the durability of the spokes, such spokes may be reinforced by cords or fiber material. While progress has been made in the development of polymer spokes for non-pneumatic tires over the past years, significant room for improvement remains.

### Summary of the Invention

The invention relates to a method in accordance with claim 1 or 15, respectively.

Dependent claims refer to preferred embodiments of the invention.

In a first preferred aspect, the present invention is directed to a method of manufacturing a supporting structure for a non-pneumatic tire, comprising at least one cord-reinforced polymer composition spoke. The method comprises the steps of providing a first mold member at least partially covered by a first polymer composition layer, applying at least one cord reinforcement onto the first polymer composition layer, and over-molding a second polymer composition layer onto the first polymer composition layer to enclose said cord reinforcement between the first polymer composition layer and the second polymer composition layer and to obtain at least a portion of the cord-reinforced polymer composition spoke.

In a second preferred aspect, the invention is directed to a method of manufacturing a supporting structure for a non-pneumatic tire comprising at least one X-shaped and cord-reinforced polymer composition spoke, wherein the X-shaped spoke has a pair of upper legs and a pair of lower legs connected by a crossing portion. The method comprises the step of providing a mold comprising mold members comprising i) a first prism-shaped mold insert for defining inner surfaces of the X-shaped spoke between its upper legs, ii) a second prism-shaped mold insert for defining inner surfaces of the X-shaped spoke between its lower legs, and iii) at least one further mold member defining outer surfaces of the X-shaped spoke essentially opposite to the inner surfaces defined by the first and second mold inserts, wherein at least one of the mold members is at least partially covered by at least one polymer composition layer. Further steps of the method include applying a cord reinforcement onto the polymer composition layer, and injection molding a further polymer composition onto the cord reinforcement and the polymer composition layer to encase the cord reinforcement with the further polymer composition and the polymer composition layer.

In a third preferred aspect of the present invention, the invention is directed to a method of manufacturing a non-pneumatic tire comprising a radially outer circumferential tread band, a radially inner hub portion and a circumferential supporting structure supporting the radially outer circumferential tread band on the radially inner hub portion, wherein the supporting structure comprises a circumferential and radially outer ring portion, a circumferential and radially inner ring portion, a plurality of cord-reinforced polymer composition spokes provided along the circumferential direction and arranged between the radially outer ring portion and the radially inner ring portion. The method comprises the step of providing a mold for molding at least a circumferential sector of the circumferential supporting structure, wherein the mold comprises a radially outer mold ring member for molding a radially outer side of at least a circumferential sector of the radially outer ring portion, and a radially inner mold ring member for molding a radially inner side of at least a circumferential sector of the radially inner ring portion, and mold inserts for molding spokes of the plurality of spokes between the mold ring members, wherein a majority of the mold members is covered by a polymer composition layer. The method further comprises the step of applying a cord reinforcement at least onto portions of the polymer composition layer, wherein the cord reinforcement reinforces and connects multiple of the spokes provided along the circumferential direction to be molded, and the step of injection molding a further polymer composition onto the cord reinforcement and the polymer composition layer to encase the cord reinforcement with the further polymer composition and the polymer composition layer.

### Brief Description of the Drawings

The invention will be described by way of example and with reference to the accompanying drawings in which:
FIG. 1 is a schematic sideview of an embodiment of a non-pneumatic tire comprising a supporting structure between a tread band and a hub portion of the tire;
FIG. 2 is a schematic cross-section of an embodiment of a cord-reinforced spoke of the supporting structure of the tire shown already in Figure 1;
FIG. 3 is a schematic, partially transparent cross-section of another embodiment of a cord-reinforced spoke for a non-pneumatic tire;
FIG. 4 shows a method for providing mold members covered with a polymer composition layer according to an embodiment of the present invention;
FIG. 5 shows a method of manufacturing a cord-reinforced polymer composition spoke according to an embodiment of the present invention;
FIG. 6 is a schematic perspective view of a cord wound multiple times about mold inserts in accordance with another embodiment of a method for manufacturing a cord-reinforced polymer composition spoke;
FIG. 7 is a schematic perspective view of a mold insert comprising a polymer composition layer having grooves for receiving and spatially separating cords or segments of a cord, in accordance with another embodiment of the present invention;
FIG. 8 is a schematic perspective view of an embodiment of a circumferential segment or sector of a supporting structure in accordance with an embodiment of the present invention;
FIG. 9 is a schematic cross-section of a mold comprising multiple mold members for manufacturing the supporting structure already shown in Figure 8;
FIG. 10 is a schematic cross-section of a circumferential sector of a cord-reinforced supporting structure obtainable with the mold in accordance with Figure 9; and
FIG. 11 is a schematic cross-section of a circumferential sector of another cord-reinforced supporting structure obtainable with the mold in accordance with Figure 9.

### Detailed Description of Preferred Embodiments of the Invention

In the first preferred aspect, the present invention is directed to a method of manufacturing a supporting structure for a non-pneumatic tire, comprising at least one cord-reinforced polymer composition spoke. The method comprises the steps of providing a first mold member at least partially covered by an, optionally pre-molded, first polymer composition layer, applying at least one cord reinforcement onto the first polymer composition layer, and over-molding a second polymer composition layer onto the first polymer composition layer (and the cord reinforcement) to enclose, or in other words, encase said cord reinforcement between the first polymer composition layer and the second polymer composition layer and/or to obtain at least a portion of the cord-reinforced polymer composition spoke.

The provision of the polymer composition layers helps to avoid that the cord reinforcement is exposed on the surface of the spoke or portions thereof. In particular, a material thickness of the first polymer composition layer (which is preferably solid when applying the cord reinforcement) avoids that the cord reinforcement touches an adjacent portion of the first mold member when being applied onto the first polymer composition layer which covers the first mold member. Thus, when removing the first mold member (and optionally further mold members), the cord reinforcement is still covered and/or concealed by the first (and also the second) polymer composition layer. The method also allows creating a defined placement of one or more cord reinforcements in the spoke, such as in a center portion of a thickness of the spoke.

In one preferred embodiment, the first polymer composition layer comprises at least one groove, wherein the cord reinforcement, such as a cord or a cord-reinforced tape, is applied onto the first polymer composition layer in the groove. Preferably, the depth of the groove is smaller than a maximum thickness of the first polymer composition layer so that the cord reinforcement is applied on the material of the polymer composition layer in the groove. Such a groove helps to further define the position of the cord reinforcement in the spoke to be manufactured, and/or avoid the movement of the cord reinforcement during said over-molding. Optionally, multiple, preferably parallel grooves, and/or segments thereof, are provided on the first polymer composition layer, which allows placement of multiple parallel cord reinforcements or cord reinforcement segments on the first polymer composition layer and, thus, within the spoke. In particular, the groove can limit movement of the cord reinforcement transversely to the extension of the groove.

In another preferred embodiment, the first mold member is a mold insert, and/or the method comprises a further step of providing at least one second mold member forming a gap between the first polymer composition layer on the first mold insert/member and the second mold member. Optionally, said step of over-molding the second polymer composition layer comprises injecting the second polymer composition into the gap to form the second polymer composition layer.

In another preferred embodiment, the first mold member is at least partially wrapped with the first polymer composition layer. Optionally, the first polymer composition layer forms a sleeve covering a surface of the first mold member.

In still another preferred embodiment, the first mold member has essentially a prism shape which is wrapped on three circumferentially adjacent sides with the first polymer composition layer.

In still another preferred embodiment, the first polymer composition and/or the second polymer composition comprises one or more of an elastomer composition (such as a rubber composition) and a thermoplastic polymer (such as a thermoplastic elastomer, e.g., a thermoplastic polyester elastomer).

In one preferred embodiment, the first polymer composition and the second polymer composition are the same. For instance, this may help to provide the same material properties throughout the spoke. Providing the same materials can improve the bond between both layers.

In another preferred embodiment, the first polymer composition and the second polymer composition are different. In some cases, it may be desirable to provide a part or side of the spoke with different material properties than another one. The present method provides an easy and efficient way to provide such different properties by the provision of at least two different polymer compositions. Optionally, if different polymer compositions are used, they are one or more of i) bondable and/or compatible to each other, ii) both elastomer compositions, such as rubber compositions, iii) co-curable to each other.

In still another preferred embodiment, the polymer may be one or more of: i) one or more polyamide polymers (such as PA-12, PA-11, PA-6); ii) one or more thermoplastic polymers such as thermoplastic polyester elastomers, thermoplastic polyurethane elastomers, polyamide thermoplastic elastomers, elastomer alloy thermoplastic vulcanizates, thermoplastic polyolefin elastomers, styrenic thermoplastic elastomers, thermoplastic resins (such as polyester resins, polyamide resins, or polyurethane resins). In particular, the term thermoplastic polymer shall include herein also thermoplastic resins.

In still another preferred embodiment, the thermoplastic polymer is a thermoplastic elastomer, such as a thermoplastic polyester elastomer.

In another preferred preferred embodiment, the polymer composition is an elastomer composition, such as a rubber composition. Optionally, said elastomer composition (such as the rubber composition) comprises one or more of rubber (such as comprising one or more of natural rubber, synthetic polyisoprene, butadiene rubber, styrene-butadiene rubber, and butyl rubber), a filler (such as comprising one or more of carbon black and silica), resin (such as a hydrocarbon resin selected from one or more of coumarone-indene resins, petroleum hydrocarbon resins, terpene resins, styrene/alphamethylstyrene resins, terpene phenol resins, rosin derived resins and copolymers and/or mixtures thereof), accelerators, antidegradants, oils, liquid diene-based polymers, coupling agents (such as carbon black coupling agents and/or silanes), sulfur donors, and sulfur. Liquid means herein that a material is in a liquid state at 23°C. The composition may be a sulfur-curable or sulfur-cured rubber composition. Optionally, elastomer compositions, such as rubber compositions may be fiber reinforced.

In still another preferred embodiment, the elastomer compositions or rubber compositions comprise 100 phr of rubber comprising one or more of natural rubber, synthetic polyisoprene, polybutadiene rubber, and styrene butadiene rubber. Preferably, the composition comprises at least 50 phr of natural rubber (such as from 50 phr to 100 phr of natural rubber), and optionally from 0 phr, or 5 phr, to 50 phr of polybutadiene rubber. Additionally, the elastomer or rubber compositions comprise a filler, preferably comprising carbon black and/or silica. For instance, such filler may be within a range of 20 phr to 150 phr, preferably within a range of 30 phr to 90 phr. Preferably, such a filler comprises predominantly carbon black. The elastomer or rubber composition may further comprise from 1 phr to 40 phr of resin, preferably including a phenolic resin. Moreover, the elastomer or rubber composition may comprise from 1 phr to 30 phr of oil, preferably from 1 phr to 20 phr of oil. Finally, the elastomer or rubber composition may typically comprise from 1 phr to 15 phr of antidegradant(s), from 0.5 phr to 10 phr of accelerator(s), from 0.1 phr to 10 phr of zinc oxide, and from 0.5 phr to 10 phr of sulfur. Further ingredients may also be present.

In still another preferred embodiment, the cord reinforcement is selected from one or more of: i) at least one cord, ii) at least one cord-reinforced tape, and iii) at least one fabric comprising cords. In one option, the cord reinforcement comprises or consists of at least one cord. Preferably, a cord is one of a multifilament cord and a monofilament cord. In another option, a cord-reinforced tape comprises multiple essentially parallel cords, optionally embedded in and/or connected by a polymer composition, such as a resin composition, which may comprise one or more of polyester, vinyl ester, polyurethane, and epoxy, to form the tape. In another option, said fabric may comprise a plurality of, preferably interconnected, essentially parallel cords. Optionally, these cords may form warp cords and/or weft cords of the fabric.

In still another preferred embodiment, the cord reinforcement, particularly one or more cords of the cord reinforcement, comprise or consist of one or more of textile material, glass fiber material, carbon fiber material, boron fiber material, basalt fiber material, plant-based material, and combinations of these materials. Optionally, multiple cords comprise different materials and/or are hybrid cords of such different materials. Optionally, said plant-based material comprises one or more of cotton, hemp, flax, sisal, and bast.

In still another preferred embodiment, the cord reinforcement, particularly one or more cords of the cord reinforcement, comprise or consist of a textile material selected from one or more of polyester (preferably, PET), polyamide (preferably, one or more of PA-6, PA-6,6, e.g., Nylon^{™}, aromatic polyamide / aramid), and rayon. Optionally, one or more of these materials may be recycled materials. Optionally, multiple cords comprise different materials and/or are hybrid cords of such different materials.

In still another preferred embodiment, the cord reinforcement, particularly one or more cords of the cord reinforcement, comprise or consist of metal, such as steel or brass-coated steel.

In another preferred embodiment, cord reinforcements provided herein are one of single filament, and multifilament cords. For instance, cords may have (maximum) diameters measured perpendicular to the extension of the cord in the spoke within a range of 0.01 mm to 2 mm, preferably within a range of 0.01 mm and 1 mm.

In still another preferred embodiment, the first polymer composition layer is solid when applying the cord reinforcement onto the first polymer composition layer.

In still another preferred embodiment, the first mold member has essentially a prism shape which is wrapped on three circumferentially adjacent sides with the first polymer composition layer, wherein the method further comprises at least one step of: providing a further mold member having essentially a prism shape which is wrapped on three circumferentially adjacent sides with a further polymer composition layer (same as or different from the first and/or second polymer composition), wherein each of the first mold member and the further mold member point with an edge towards each other and/or are arranged in parallel to each other; and applying the cord reinforcement onto at least one side of the first mold member which is wrapped with the first polymer composition layer and/or onto at least one side of the further mold member which is wrapped with the further polymer composition layer.

Preferably, a prism shape is a triangular prism shape, or, in other words, a prism shape with a triangular base surface. Corners of the triangular shape or surface can optionally be curved.

In another preferred embodiment, the step of providing a first mold member covered by a first polymer composition layer comprises the sub-step of pre-molding and/or over-molding the first polymer composition layer on the first mold member. Optionally, a corresponding step can apply to other/further layers and respective mold members mentioned herein.

In another preferred embodiment, the first polymer composition layer comprises a pre-step of molding the first polymer composition layer in a separate mold system and then subsequently placing the first polymer composition layer on the first mold member.

In still another preferred embodiment, multiple sections of the cord reinforcement (or in other words, of the same cord reinforcement), which are spaced apart from one another, are applied onto the first polymer composition layer. Preferably, the cord reinforcement is one of a cord-reinforced tape and a cord herein.

In still another preferred embodiment, the sections of the cord reinforcement, which are applied onto the first polymer composition layer, are applied onto the first polymer composition layer side by side, such as in grooves in the first polymer composition layers arranged side by side.

In still another preferred embodiment, (neighboring) sections of the cord reinforcement, which are applied side by side, have a distance between each other, or are, in other words, spaced apart from one another.

In still another preferred embodiment, the spoke comprises or has an essentially X-shaped cross-section. Preferably, the cross-section extends in a plane in parallel to the equatorial plane of the tire, or in parallel to the circumferential centerline of the tire, which are as such known to the person skilled in the art.

In yet another preferred embodiment, the spoke comprises an essentially X-shaped cross-section with a pair of upper legs, a pair of lower legs, and a crossing portion connecting the pair of upper legs with the pair of lower legs, wherein, optionally, the first mold member is arranged between the pair of upper legs to partially delimit the upper legs on an inner side and the further mold member is arranged between the pair of lower legs to partially delimit the lower legs on an inner side. As another option, the method further comprises the step of providing one or more additional mold members facing the first mold member and the further mold member to delimit the upper legs and the lower legs on an outer side (of the spoke and/or its legs).

In still another preferred embodiment, the method further comprises the step of removing the first mold member, and optionally the second and/or further mold members, after over-molding. In other words, the first polymer composition layer and preferably the further polymer composition layer become a part or an integral part of the spoke. In addition, or alternatively, the first mold member and optionally the second and/or further mold members, are removed or separated without the polymer composition layers from the spoke comprising these layers.

In still another preferred embodiment, the supporting structure comprises from 4 to 100 of the spokes, preferably from 20 to 70 of the spokes, or even more preferably from 30 to 70 of the spokes.

In the second preferred aspect, the invention is directed to the method of manufacturing a supporting structure for a non-pneumatic tire comprising at least one X-shaped and cord-reinforced polymer composition spoke, wherein the X-shaped spoke has a pair of upper legs and a pair of lower legs connected by a crossing portion. The method comprises the step of providing a mold comprising mold members comprising i) a first prism-shaped mold insert (or member) for defining inner surfaces of the X-shaped spoke between its upper legs, ii) a second prism-shaped mold insert (or member) for defining inner surfaces of the X-shaped spoke between its lower legs, and iii) at least one further mold member defining outer surfaces of the X-shaped spoke essentially opposite to the inner surfaces defined by the first and second mold inserts, wherein at least one of the mold members (or a plurality, or majority of the mold members) is at least partially covered by at least one polymer composition layer. Further method steps comprise applying a cord reinforcement onto the polymer composition layer, and injection molding a further polymer composition onto the cord reinforcement and the polymer composition layer to encase (or enclose) the cord reinforcement with or by the further polymer composition and the polymer composition layer.

Similar to the first aspect, the method according to the second aspect provides an advanced way of providing cord-reinforced spokes of a supporting structure of a non-pneumatic tire. In particular, if desired, it is possible to provide the cord reinforcement in a center portion with respect to the thickness of the spoke, e.g., in one or more of the spoke's legs. In other words, the invention allows an advanced and/or facilitated positioning of one or more cord reinforcements in a manufactured spoke.

In one preferred embodiment, at least a portion of the polymer composition layer comprises at least one groove extending essentially in parallel to and/or along a leg of the spoke, wherein the cord reinforcement is optionally applied onto the polymer composition layer in the groove so as to restrict movement of the cord reinforcement perpendicular to the groove. In an option, the cord reinforcement is a cord or a cord-reinforced tape.

In another preferred embodiment, the cord reinforcement extends at least through one of the lower legs, the crossing portion and at least one of the upper legs. A particularly durable spoke can be provided by letting the (same) cord reinforcement extend through these two legs and the crossing portion.

In still another preferred embodiment, the polymer composition layer is provided as an over-molded sleeve circumferentially surrounding the respective mold insert.

In still another preferred embodiment, the at least one further mold member has an essentially hexagonal cross-section, optionally to define adjacent outer shapes of two neighboring spokes. Optionally, the further mold member has curved edges and/or corners.

In the third preferred aspect of the present invention, the invention is directed to the method of manufacturing a non-pneumatic tire comprising a radially outer circumferential tread band (optionally comprising one or more of a radially outer tread portion and a radially inner shearband), a radially inner hub portion and a circumferential supporting structure supporting the radially outer circumferential tread band on the radially inner hub portion. The supporting structure comprises a circumferential and radially outer ring portion (adjacent the tread band), a circumferential and radially inner ring portion (adjacent the hub portion), and a plurality of spokes provided along the circumferential direction and arranged and/or extending between the radially outer ring portion and the radially inner ring portion, preferably so as to support the radially outer ring portion on the radially inner ring portion. The method comprises the step of providing a mold for molding at least a circumferential segment or sector of the circumferential supporting structure, wherein the mold comprises a radially outer mold ring member for molding a radially outer side of at least a circumferential segment or sector of the radially outer ring portion, and a radially inner mold ring member for molding a radially inner side of at least a circumferential segment or sector of the radially inner ring portion, and mold inserts or members for molding spokes of the plurality of spokes between the mold ring members, wherein a majority of the mold inserts and/or members is at least partially covered by a polymer composition layer. The method further comprises the steps of applying a cord reinforcement onto the polymer composition layer (or at least portions thereof), wherein the cord reinforcement reinforces and/or connects multiple of the spokes provided along the circumferential direction to be molded; and injection molding a further polymer composition onto the cord reinforcement and the polymer composition layer to encase the cord reinforcement with the further polymer composition and the polymer composition layer.

Thus, it is possible to manufacture entire circumferential supporting structures and/or circumferential sectors thereof, comprising multiple cord-reinforced spokes. Such a manufacturing process can be carried out in large scale production and/or cost efficiently.

In one preferred embodiment, the cord reinforcement extends through multiple circumferentially neighboring spokes, and preferably from one circumferential end portion of the sector of the supporting structure to the other circumferential end portion of the sector of the supporting structure molded.

In another preferred embodiment, the cord reinforcement, or multiple cord reinforcements, are applied onto the polymer composition layer within the assembled mold. Alternatively, the cord reinforcement is applied (or multiple cord reinforcements are applied) onto the polymer composition layers on the mold inserts, which are optionally inserted into the radially outer mold ring member and the radially inner mold ring member thereafter.

In still another preferred embodiment, the crossing portion is arranged radially closer to the hub portion than to the radially outer ring portion, and/or the radially inner legs are shorter than the radially outer legs.

In still another preferred embodiment, one or more of the spokes comprise or have a cross-section, in a plane parallel to the equatorial plane of the tire, of one or more of: X-shapes, V-shapes, C-shapes, I-shapes, H-shapes, O-shapes, S-shapes, Y-shapes, half-X-shapes, and one or more of bent and kinked shapes/forms of the aforementioned shapes. Preferably, the shape is an X-shape, such as a straight or bent X-shape. Another preferred shape is a half X-shape, particularly corresponding to the shape of an X essentially cut in the radial direction. It is also possible to mention such a shape as an angled bracket shape or chevron shape, wherein its kink is not necessarily at the radial center of the shape.

It is emphasized that the above-mentioned aspects, as well as their embodiments and/or features mentioned herein may be combined with one another.

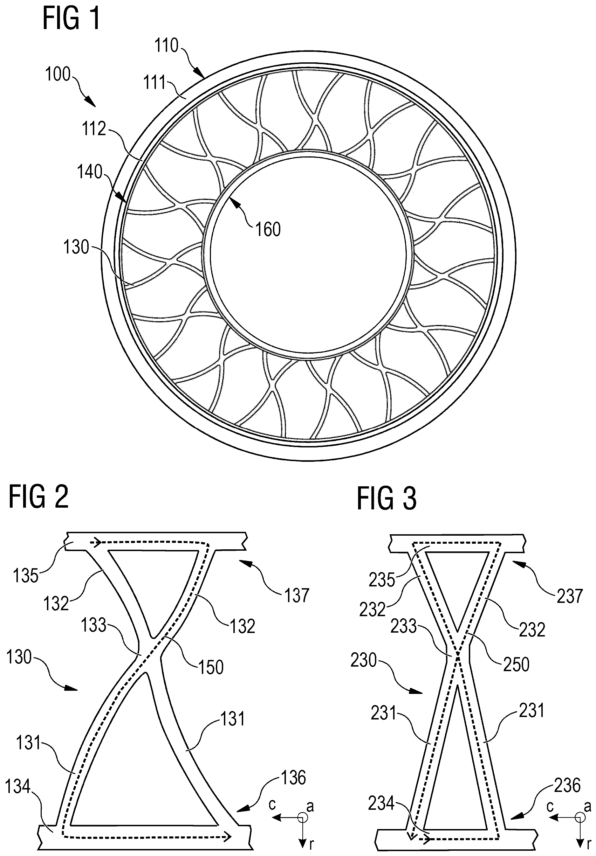

Figure 1 shows a preferred embodiment of a non-pneumatic tire 100 in accordance with the present invention, or in other words manufactured in accordance with an embodiment of a method according to the present invention. The tire 100 comprises a tread band 110 with a radially outer tread portion 111 and a radially inner shearband 112, a radially inner hub portion 160, and a supporting structure 140 which supports the tread band 110 on the hub portion 160. Furthermore, the supporting structure 140 extends circumferentially about the axis of the tire 100 and comprises along the circumferential direction a plurality of spokes 130. In the present embodiment, said spokes 130 have bent, or in other words, curved X-shapes. Shearbands 112 as such are known to the person skilled in the art of non-pneumatic tires and typically comprise a plurality of circumferentially extending, stacked rubber composition layers. At least some of such layers are typically cord-reinforced.

Figure 2 shows a schematic cross-section of a spoke 130 which is cord-reinforced by a cord 150. The spoke 130 comprises a radially inner pair of legs 132, a radially outer pair of legs 131, and a crossing portion 133 which connects said pairs of legs 131, 132 with one another. Furthermore, the depicted spoke 130 has a radially inner head portion 137 and a radially outer foot portion 136. As shown, each pair of legs 131, 132 may be connected by a respective connecting portion 134, 135 in the respective foot portion 136 or head portion 137. As visible in Figure 2, the cord 150 extends within the spoke 130 in a Z-pattern, without extending out of the spoke's surface. In other words, the cord 150 is fully covered by a polymer composition of the spoke 130, preferably comprising a thermoplastic elastomer (such as a thermoplastic polyester elastomer) or a rubber composition. In particular, the cord 150 is wound through the spoke 130 between its radially inner head portion 137 and its radially outer foot portion 136. In another embodiment, which is not shown, it is possible that the same cord or cord-reinforced tape is wound multiple times through the same spoke, such as between its head portion and foot portion. In another option, it is also possible that multiple cords or cord-reinforced tapes extend through the spoke. In addition, or alternatively, another option consists in having one or more cords, cord-reinforced tapes, or fabrics comprising cords, extending through multiple neighboring spokes.

In multiple embodiments and/or Figures herein, the circumferential direction c, the axial direction a, and the radial direction r, are indicated for better orientation. The circumferential direction c is perpendicular to the axial direction a. The same applies to the radial direction r. The axial direction a is parallel to the axis of rotation of the tire. Such directions mentioned herein are not necessarily limited to a specific orientation of the given direction, unless otherwise described herein.

Figure 3 shows another embodiment of an X-shaped spoke 230, or in other words, comprising an X-shaped cross-section, which has a pair of radially inner straight legs 232, a pair of radially outer straight legs 231, which are connected by a crossing portion 233, and which comprises a cord 250 wound between a radially inner head portion 237 and a radially outer foot portion 236 of the spoke 230. Radially inner ends of the legs 232 are connected by the radially inner connecting portion 235, and radially outer ends of the spokes 231 are connected by a radially outer connecting portion 234. Again, the cord 250 is fully encased within the material of the spoke 230. In other words, it is not visible on surfaces of the spoke 230, as shown in the present cross-section. It is noted that it is also possible to describe a pair of radially inner legs as a pair of radially upper legs and a pair of radially outer legs as a pair of radially lower legs respectively. In the present embodiment, the cord 250 passes through each of the legs 231, 232 of the spoke 230.

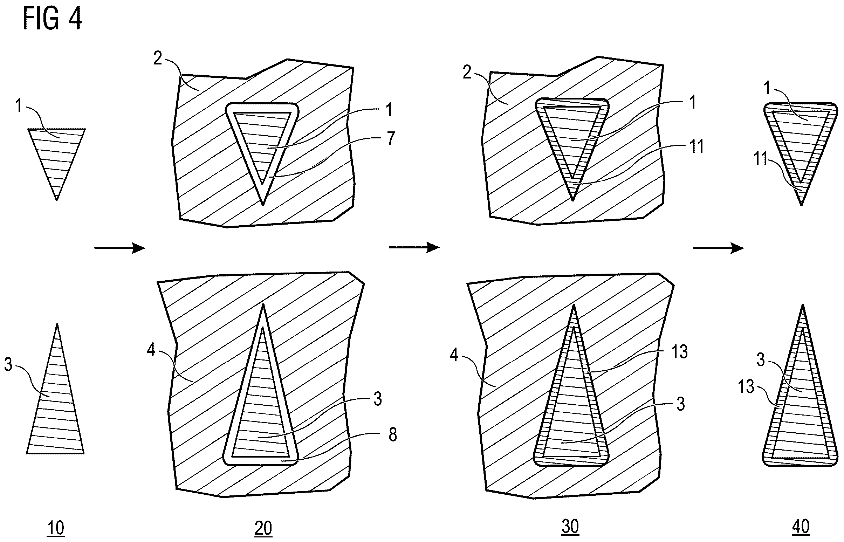

Figure 4 shows method steps 10, 20, 30, 40 for manufacturing or making mold members, particularly mold inserts 1, 3, for manufacturing the spoke 230 shown already in Figure 3. In step 10, two mold inserts 1, 3 are provided, each having a prism shape shown with an essentially triangular cross-section. In step 20, these mold inserts 1, 3 are placed or mounted into respective mold members 2, 4 having each a mold cavity 7, 8 for receiving a respective one of the mold inserts 1, 3 and forming a gap between the walls of a respective mold insert 1, 3 and the respective mold member 2, 4. In the further method step 30, the gaps formed between the mold inserts 1, 3 and the corresponding mold members 2, 4 are filled with a polymer composition. In particular, said polymer composition is injection molded into the gap, thereby forming a respective one of the polymer composition layers 11, 13. Preferably, the polymer composition is either a thermoplastic polyester elastomer or a rubber composition. Afterwards, in step 40, the mold inserts 1, 3 are removed from the mold members 2, 4 (or vice versa) so that each mold insert 1, 3 is covered with a polymer composition layer 11, 13.

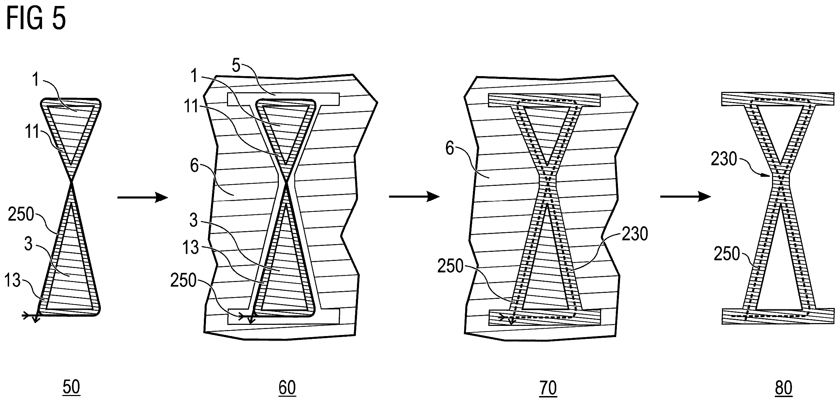

As further shown in method step 50, according to the embodiment of Figure 5, the mold inserts 1, 3, preferably made in accordance with the method steps shown in Figure 4, are positioned above each other with two of their edges pointing to each other. Furthermore, the inserts 1, 3 still carry the polymer composition layers 11, 13. The cord 250 is wound onto these layers 11, 13 covering the inserts 1, 3, crossing a gap between both inserts 1, 3. In the further method step 60, the mold inserts 1, 3 covered with the polymer composition layers 11, 13 and carrying the cord 250 are inserted into a mold member 6 which defines the outer shape of an X-shaped spoke to be molded. In other words, the mold member 6 comprises a mold cavity 5 having the outer shape of the spoke 230 to be molded. In step 70, the gap between the mold member 6 and the polymer composition layers 11, 13 as well as the cord 250 is filled and/or injection molded with a second polymer composition flowing into the gap, which is in the present and non-limiting embodiment the same as the polymer composition forming the first polymer composition layer 11, 13. Thus, in step 70, a spoke 230 is molded or formed which comprises the cord 250 embedded, or in other words encased or enclosed, in the polymer composition. In step 80, the spoke 230 is removed from the mold member 6, e.g., after cooling down. Furthermore, also the inserts 1, 3 are separated from, particularly pulled out of the first polymer composition layer which has become an integral part of the spoke 230.

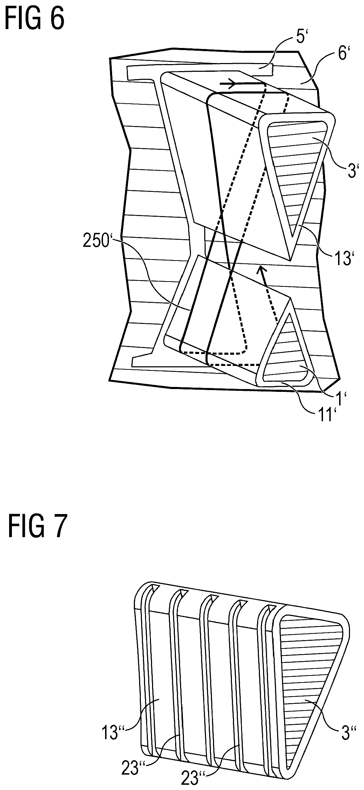

The embodiment shown in Figures 3 and 5 provided a spoke 230 with a cord 250 wound between a head portion and a foot portion of the spoke 230. Preferably, it is possible that a cord is wound multiple times between such a head portion and foot portion of a spoke. In the embodiment of Figure 6, an embodiment of a manufacturing method is indicated which provides two mold inserts 1', 3' which are covered by a respective polymer composition layer 11', 13', wherein a cord 250' is wound multiple times between the head portion and the foot portion of the spoke to be molded (i.e., applied onto the polymer composition layers 11', 13').

For instance, it is possible to hold both mold inserts 1', 3' in place and wind the cord 250' onto the inserts 1', 3' covered by the polymer composition layers 11', 13' and to insert these mold inserts 1', 3' (which can also be mentioned as mold members) into a cavity 5' of a complementary or corresponding mold member 6' which defines an outer shape of the spoke to be molded. Such a provision of a cord 250' wound multiple times through the spoke helps to provide an even more durable spoke. Furthermore, the provision of the cord 250' on the polymer composition layer 11', 13' ensures that the cord 250' is not exposed at the spoke's surface after demolding.

Figure 7 shows another preferred option in accordance with a preferred embodiment of the present invention, in which a mold member or mold insert 3" comprises again a polymer composition layer 13" covering the outer surface of the mold insert 3". In addition to the design of similar mold inserts already shown in previously described Figures, the mold insert 3" according to Figure 7 comprises multiple, preferably parallel, grooves 23". These grooves 23" can be used to position one or more cords, or in other words one or more segments of such one or more cords, in the grooves 23". This allows an even better control of the position of the cord(s) in the spoke to be molded. In particular, a movement of a cord transversely to the extension of the groove 23" can be limited.

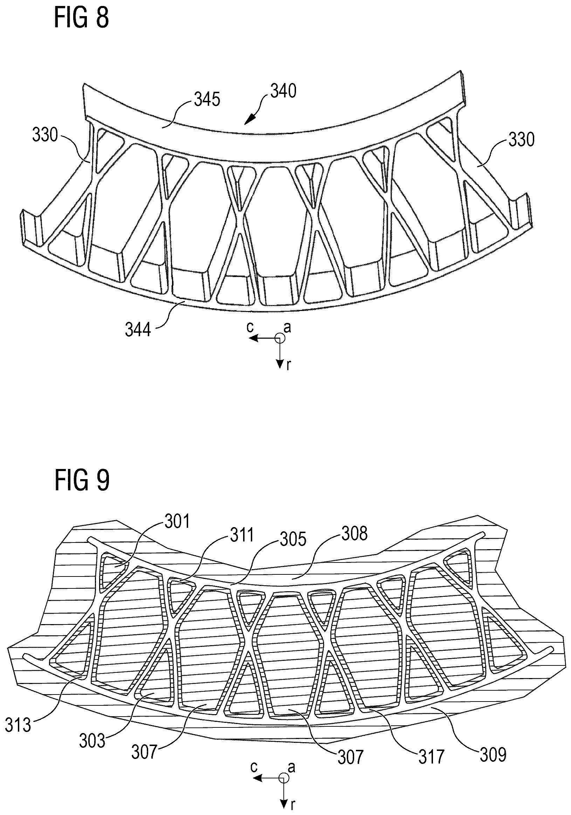

Figure 8 shows a circumferential segment or sector of a supporting structure 340 comprising a radially inner circumferential ring portion (or in other words segment or sector) 345 and a radially outer circumferential ring portion (or in other words segment or sector) 344 which are connected by a plurality of spokes 330, e.g., in this case six spokes 330 which have each an X-shaped cross-section. It is possible to circumferentially combine or apply multiple of such sectors 340 to provide a fully circumferential supporting structure for a non-pneumatic tire.

Figure 9 provides an embodiment of a mold for manufacturing the sector of a supporting structure 340, as already shown in Figure 8. The non-limiting embodiment of the mold shown in Figure 9, comprises a plurality of mold members or inserts 301, 303, 307 which are covered by a respective polymer composition layer 311, 313, 317. Furthermore, these mold members 301, 303, 307 are shown mounted into a mold cavity 305 formed by one or more mold members 308, 309. For the sake of simplicity, mold members 308, 309 are shown in Figure 9 as being integrally formed but they could also comprise or consist of multiple separate mold members forming the mold cavity 305. Amongst others, an inner surface of the mold member 308 facing the mold cavity 305 is adapted to form or mold a radially inner side of the ring portion 345 to be molded. The mold member 309 is adapted to form or mold a radially outer side of the radially outer ring portion 344 to be molded. In accordance with the present embodiment of the invention, the mold members 301, 303, 307 are each covered by a polymer composition layer. However, it is also possible that not all of them are covered by a polymer composition layer, e.g., depending on the way of desired winding of a cord on these members. In addition, or alternatively, it is another option that the surfaces of one or more of mold members 308, 309 are also covered by a polymer composition layer (not shown in Figure 9).

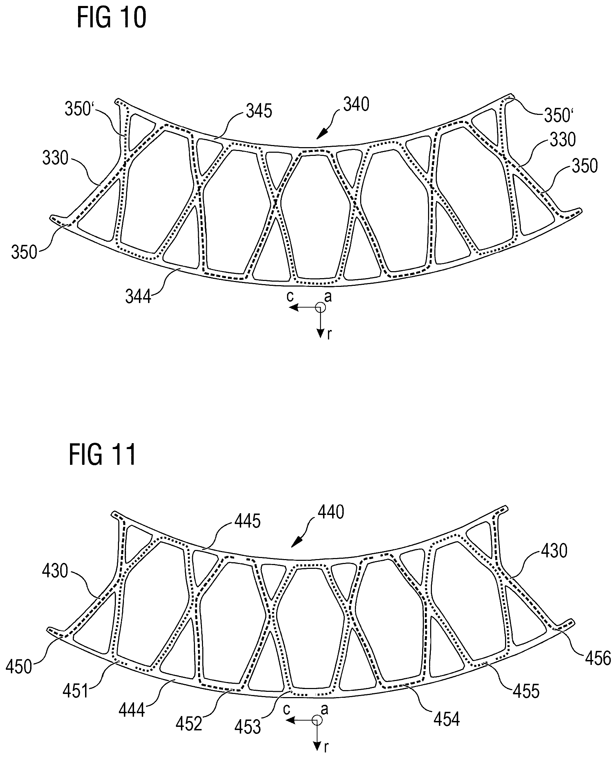

Similar to the embodiment shown in Figure 5, it is possible to wind at least one cord, or, e.g., a cord-reinforced tape, onto one or more of the mold inserts 301 and 303. There are various options of providing or applying one or more cord reinforcements onto the mold members, wherein some of those are further indicated in Figures 10 and 11.

Figure 10 shows a schematic cross-section of the supporting structure shown already in Figure 8 and molded with the mold shown in Figure 9. In accordance with the embodiment of Figure 10, two cords 350, 350' have been wound multiple times between the radially inner ring portion 345 and the radially outer ring portion 344. Each one of the cords 350, 350' extends through each spoke, particularly through one radially inner leg, the crossing portion of the respective spoke 330 and one radially outer leg. Both cords 350, 350' cross each other in the crossing portion of the spoke 330. Such a winding pattern of cords 350, 350' provides a very durable sector of a supporting structure 340. Moreover, the cords 350, 350' are fully encased in the polymer composition of the spokes 330. Optionally, the cords 350, 350' are wound through a fully circumferential ring portion (not shown). Preferably, the cords 350, 350' are axially separated from each other, at least in the crossing portion of the spokes 330. Similarly, in another embodiment (not explicitly shown), one or more cord-reinforced tapes could be wound in a sector of a supporting structure as shown for the cords of Figure 10.

Figure 11 shows another schematic cross-section of a sector of a supporting structure, similar to that of Figures 8 and 10 but with a different preferred winding pattern of cords and number of cords. In particular, the depicted sector of a supporting structure 440, comprises a radially inner ring portion 445, a radially outer ring portion 444 connected with each other by a plurality of spokes 430 which are arranged along the circumferential direction so as to support the radially outer ring portion 444 on the radially inner ring portion 445. In contrast to previously described embodiments, the embodiment of Figure 11 comprises seven separate cords 450, 451, 452, 453, 454, 455, 456. Each of the cords 451, 452, 453, 454, and 455 connects two circumferentially neighboring spokes 430 with each other. In particular, in the present non-limiting embodiment, such cords, such as the cord 451, may be wound from the radially outer/inner ring portion through one radially outer adjacent leg of a spoke, through the crossing portion of the spoke, further into the radially inner/outer leg of the same spoke and into the radially inner/outer ring portion. From there the same cord is further wound into a radially inner/outer leg of a neighboring spoke, further through its crossing portion and the radially outer/inner leg of the same spoke and finally back into the radially outer/inner ring portion, where two ends of the cord optionally face each other. It is emphasized that it is possible that such a cord, such as the cord 451, is wound multiple times through the sector of the supporting structure in an axial direction so as to further reinforce two adjacent spokes 430, particularly also in the axial direction. Again, in another embodiment, it is possible to use cord-reinforced tapes instead of the cords 450, 451, 452, 453, 454, 455, 456.

While not shown in the embodiments herein, another option consists in that multiple circumferential rows of spokes are provided axially beside one another, such as two, three or four of such rows. From row to row, circumferential positions of such spokes could be the same as in a neighboring row or circumferentially shifted.

Molds, mold inserts and/or mold members are provided preferably with one or more temperature resistant materials, such as having a melting point higher than 200°C, preferably higher than 300°C. Plastic, ceramic or metal materials are non-limiting examples for such mold materials.

In summary, the present invention provides for advanced methods of manufacturing cord-reinforced supporting structures and/or cord-reinforced spokes thereof, for non-pneumatic tires. The methods, and optionally their embodiments, provide efficient ways of controlling the positioning of cord reinforcements or cords and/or can help to avoid that cord reinforcements appear on an outer surface of supporting structures or spokes. Furthermore, such methods are suitable for cost efficient mass production of supporting structures and/or spokes.

## Claims

1. A method of manufacturing a supporting structure for a non-pneumatic tire comprising at least one cord-reinforced polymer composition spoke, the method comprising the steps of:
providing a first mold member at least partially covered by a first polymer composition layer;
applying at least one cord reinforcement onto the first polymer composition layer; and
over-molding or injection molding a second polymer composition layer onto the first polymer composition layer to enclose said cord reinforcement between the first polymer composition layer and the second polymer composition layer and to obtain at least a portion of the cord-reinforced polymer composition spoke.

2. The method according to claim 1, wherein the first polymer composition layer comprises at least one groove and wherein the cord reinforcement is applied onto the first polymer composition layer in the groove.

3. The method according to claim 1 or 2, wherein the first mold member is a mold insert and the method comprises a step of:
providing at least one second mold member forming a gap between the first polymer composition layer on the mold insert and the second mold member, and
wherein said step of over-molding the second polymer composition layer comprises injecting the second polymer composition into the gap to form the second polymer composition layer.

4. The method according to at least one of the previous claims, wherein the first mold member is at least partially wrapped with the first polymer composition layer; and/or wherein the first mold member essentially has a prism shape which is wrapped on three circumferentially adjacent sides with the first polymer composition layer.

5. The method according to at least one of the previous claims, wherein the first polymer composition and the second polymer composition comprise one or more of an elastomer composition and a thermoplastic polymer; and/or wherein the cord reinforcement comprises at least one cord comprising one or more of textile material, glass fiber material, carbon fiber material, boron fiber material, basalt fiber material, plant-based material, and combinations of these materials.

6. The method according to at least one of the previous claims, wherein the first polymer composition layer is solid when applying the cord reinforcement onto the first polymer composition layer.

7. The method according to at least one of the previous claims,
wherein the first mold member has essentially a prism shape which is wrapped on three circumferentially adjacent sides with the first polymer composition layer, and
wherein the method further comprises the steps of:
providing a further mold member having essentially a prism shape which is wrapped on three circumferentially adjacent sides with a further polymer composition layer, wherein each of the first mold member and the further mold member point with an edge towards each other and are arranged in parallel to each other; and
applying the cord reinforcement onto at least one side of the first mold member which is wrapped with the first polymer composition layer and onto at least one side of the further mold member which is wrapped with the further polymer composition layer.

8. The method according to at least one of the previous claims, wherein the step of providing a first mold member covered by a first polymer composition layer comprises the sub-step of over-molding the first polymer composition layer on the first mold member.

9. The method according to at least one of the previous claims, wherein the cord reinforcement is a cord, wherein multiple sections of the cord, which are spaced apart from one another along the cord, are applied onto the first polymer composition layer, and, optionally, wherein the sections of the cord, which are applied onto the first polymer composition layer, are applied onto the first polymer composition layer side by side, preferably with having a distance between each other.

10. The method according to at least one of the previous claims, wherein the spoke comprises an essentially X-shaped cross-section.

11. The method according to claim 10, wherein the spoke comprises an essentially X-shaped cross-section with a pair of upper legs, a pair of lower legs, and a crossing portion connecting the pair of upper legs with the pair of lower legs, and wherein the first mold member is arranged between the pair of upper legs to partially delimit the upper legs on an inner side and the further mold member is arranged between the pair of lower legs to partially delimit the lower legs on an inner side, and wherein the method further comprises providing one or more additional mold members facing the first mold member and the further mold member to delimit the upper legs and the lower legs on an outer side.

12. The method according to at least one of the previous claims, further comprising the step of removing the first mold member after over-molding.

13. The method according to at least one of the previous claims, the non-pneumatic tire comprising at least one X-shaped and cord-reinforced polymer composition spoke, wherein the X-shaped spoke has a pair of upper legs and a pair of lower legs connected by a crossing portion, and wherein the method comprises the steps of:
a) providing a mold comprising mold members comprising i) a first prism-shaped mold insert for defining inner surfaces of the X-shaped spoke between its upper legs, ii) a second prism-shaped mold insert for defining inner surfaces of the X-shaped spoke between its lower legs, and iii) at least one further mold member defining outer surfaces of the X-shaped spoke essentially opposite to the inner surfaces defined by the first and second mold inserts, wherein at least one of the mold members is at least partially covered by at least one polymer composition layer;
b) applying a cord reinforcement onto the polymer composition layer; and
c) Injection molding a further polymer composition onto the cord reinforcement and the polymer composition layer to encase the cord reinforcement with the further polymer composition and the polymer composition layer.

14. The method according to at least one of the previous claims, wherein at least a portion of the polymer composition layer comprises at least one groove extending essentially in parallel to and along a leg of the spoke, and wherein the cord reinforcement is applied onto the polymer composition layer in the groove so as to restrict movement of the cord reinforcement perpendicular to the groove; and/or wherein the polymer composition layer is provided as an over-molded sleeve on the respective mold insert and circumferentially surrounds the respective mold insert.

15. A method of manufacturing a non-pneumatic tire comprising a radially outer circumferential tread band, a radially inner hub portion and a circumferential supporting structure supporting the radially outer circumferential tread band on the radially inner hub portion, wherein the supporting structure comprises a circumferential and radially outer ring portion, a circumferential and radially inner ring portion, a plurality of cord-reinforced polymer composition spokes provided along the circumferential direction and arranged between the radially outer ring portion and the radially inner ring portion, wherein the method comprises the steps of:
providing a mold for molding at least a circumferential sector of the circumferential supporting structure, the mold comprising a radially outer mold ring member for molding a radially outer side of at least a circumferential segment of the radially outer ring portion, and a radially inner mold ring member for molding a radially inner side of at least a circumferential segment of the radially inner ring portion, and mold inserts for molding spokes of the plurality of spokes between the mold ring members, wherein a majority of the mold inserts is covered by a polymer composition layer;
applying a cord reinforcement at least onto portions of the polymer composition layer, wherein the cord reinforcement reinforces and connects multiple of the spokes provided along the circumferential direction to be molded; and
injection molding a further polymer composition onto the cord reinforcement and the polymer composition layer to encase the cord reinforcement with the further polymer composition and the polymer composition layer.
